# EUROPEAN PATENT SPECIFICATION

(11) **EP 3 015 983 B1**
(45) Date of publication and mention of the grant of the patent: **31.03.2021**
(21) Application number: 15192161.6
(22) Date of filing: 29.10.2015
(51) Int. Cl.: G06F 9/50

(54) **METHOD AND DEVICE FOR OPTIMIZING MEMORY**
VERFAHREN UND VORRICHTUNG ZUR SPEICHEROPTIMIERUNG
PROCÉDÉ ET DISPOSITIF POUR OPTIMISER LA MÉMOIRE

(30) Priority: 31.10.2014 CN 201410602435
(43) Date of publication of application: 04.05.2016
(73) Proprietor: Xiaomi Inc., Beijing 100085 (CN)
(72) Inventor: QIU, Feng, Beijing 100085 (CN); ZHANG, Jianchun, Beijing 100085 (CN); HUANG, Qiwu, Beijing 100085 (CN)
(74) Representative: Cabinet Beau de Loménie

(56) References cited:
- WO-A1-2009/033166
- US-A1- 2005 232 192
- US-A1- 2013 290 595
- US-A1- 2014 020 085
- US-B1- 7 234 047
- AGARWAL, JUNGHANS: "Swapping Out Coordination of Web Processes to the Web Browser", IEEE 8TH EUROPEAN CONFERENCE ON WEB SERVICES, 1 December 2010 (2010-12-01), pages 115-122, XP031853572, ISBN: 978-1-4244-9397-5

## Description

### TECHNICAL FIELD

The present invention relates to the field of computer technologies and, more particularly, to a method and a device for optimizing memory.

### BACKGROUND

With more and more applications operating in a terminal, the available memory of the terminal becomes less and less, which affects the smoothness of the operating applications; therefore, the memory of the terminal needs to be optimized.

When optimizing the memory, the terminal may arrange a plurality of created processes into one control group (Cgroup) and restrict a total resource value that could be occupied by the processes in the control group through setting a resource threshold. When the terminal needs to add a newly created process into the control group and detecting that the total resource value of the control group after adding the newly created process exceeds the resource threshold, a swap-out (swap) operation is performed, i.e., the terminal transfers data corresponding to an idle process that is not used for a period of time in the control group to a storage device, allocates resources occupied by the data to the newly created process, and transfers the data from the storage device to the resources occupied by the control group when the idle process is needed again.

The related art at least has the following defects: when the terminal adds the newly created process into the control group while performing the swap-out operation, the time delay of the swap-out operation is relatively long, which affects the operating speed of the terminal.

Document US2005/232192 A1 discloses a method of managing power in a data processing system includes monitoring a system parameter indicative of power consumption. Responsive to determining that the parameter differs from a specified threshold, a system guest, such as an operating system, is forced to release a portion of its allocated system memory. The portion of system memory released by the guest is then reclaimed by the system. The reclaimed system memory and the resulting decrease in allocated memory may enable the system to reduce system memory power consumption. The operating system may de-allocate a portion of system memory when a balloon code device driver executing under the operating system requests the operating system to allocate memory to it. The system memory allocated to the balloon device driver is then reclaimed by supervisory code such as a hypervisor.

### SUMMARY

In order to overcome the problem that the operating speed of the terminal is affected due to a long time delay of the swap-out operation performed by the terminal while adding the newly created process into the control group, the present invention provides a method and a device for optimizing memory.

The invention is defined by a method according to claim 1, a device according to Z claim 5, a computer program according to claim 9 and a non-transitory computer readable storage medium according to claim 10. Further embodiments are defined by the dependent claims.

According to a first aspect of embodiments of the present invention, there is provided a method for optimizing memory, according to independent claim 1.

Optionally, performing the swap-out operation on the resources occupied by the idle process in the control group, so that the total resource value occupied by all processes in the control group is less than the resource threshold includes:
setting an initial resource threshold for the control group, the initial resource threshold being greater than the resource threshold;
detecting whether the total resource value occupied by all processes in the control group is less than the initial resource threshold;
if detecting that the total resource value occupied by all processes in the control group is less than the initial resource threshold, decreasing the initial resource threshold, and continuously performing the step of detecting whether the total resource value occupied by all processes in the control group is less than the initial resource threshold until the initial resource threshold is equal to the resource threshold and the total resource value occupied by all processes in the control group is less than the resource threshold; and
if detecting that the total resource value occupied by all processes in the control group is greater than the initial resource threshold, performing a swap-out operation on the resources occupied by the idle process in the control group, and continuously performing the step of detecting whether the total resource value occupied by all processes in the control group is less than the initial resource threshold.

Optionally, decreasing the initial resource threshold, and continuously performing the step of detecting whether the total resource value occupied by all processes in the control group is less than the initial resource threshold until the initial resource threshold is equal to the resource threshold and the total resource value occupied by all processes in the control group is less than the resource threshold includes:
decreasing the initial resource threshold;
detecting whether a difference between the initial resource threshold after decrease and the resource threshold is less than a predetermined numerical value; and
if detecting that the difference is less than the predetermined numerical value, setting the initial resource threshold after decrease as the resource threshold, and continuously performing the step of detecting whether the total resource value occupied by all processes in the control group is less than the initial resource threshold until the total resource value occupied by all processes in the control group is less than the resource threshold.

Optionally, the method further includes:
if an error occurs while decreasing the initial resource threshold, stopping modifying the initial resource threshold; and
after a predetermined time period, setting the initial resource threshold as the initial resource threshold before decrease, and continuously performing the step of detecting whether the total resource value occupied by all processes in the control group is less than the initial resource threshold.

According to a second aspect of the present invention, there is provided a device for optimizing memory, according to independent claim 5.

Optionally, the resource swap-out module includes:
a first setting submodule configured to set an initial resource threshold for the control group, the initial resource threshold being greater than the resource threshold;
a resource detection submodule configured to detect whether the total resource value occupied by all processes in the control group is less than the initial resource threshold set by the first setting submodule;
a first processing submodule configured to, when the resource detection submodule detects that the total resource value occupied by all processes in the control group is less than the initial resource threshold, decrease the initial resource threshold, and continuously perform the operation of detecting whether the total resource value occupied by all processes in the control group is less than the initial resource threshold until the initial resource threshold is equal to the resource threshold and the total resource value occupied by all processes in the control group is less than the resource threshold; and
a second processing submodule configured to, when the resource detection submodule detects that the total resource value occupied by all processes in the control group is greater than the initial resource threshold, perform a swap-out operation on the resources occupied by the idle process in the control group, and continuously perform the operation of detecting whether the total resource value occupied by all processes in the control group is less than the initial resource threshold.

Optionally, the first processing submodule includes:
a threshold decreasing submodule configured to decrease the initial resource threshold;
a difference detection submodule configured to detect whether a difference between the initial resource threshold after being decreased by the threshold decreasing submodule and the resource threshold is less than a predetermined numerical value; and
a second setting submodule configured to, when the difference detection submodule detects that the difference is less than the predetermined numerical value, set the initial resource threshold after decrease as the resource threshold, and continuously perform the operation of detecting whether the total resource value occupied by all processes in the control group is less than the initial resource threshold until the total resource value occupied by all processes in the control group is less than the resource threshold.

Optionally, the first processing submodule further includes:
a modification suspension submodule configured to, when an error occurs while decreasing the initial resource threshold, stop modifying the initial resource threshold; and
a detection circulation submodule configured to, after a predetermined time period, set the initial resource threshold as the initial resource threshold before decrease, and continuously perform the operation of detecting whether the total resource value occupied by all processes in the control group is less than the initial resource threshold.

The present invention also provides a computer program stored on a computer usable medium comprising computer readable instructions, which when executing on a processor of a device for optimizing memory, a terminal or generally speaking a computer, causing the device, the terminal, or the computer to implement the method according to the invention.

The technical solutions provided by the embodiments of the present invention may include the following advantageous effects:
through detecting whether the total resource value occupied by all processes in the control group at the current moment reaches the resource critical value while the newly created process needs to be added in the control group, adding the newly created process into the control group that is not restricted by the resource threshold if detecting that the total resource value occupied by all processes in the control group at the current moment reaches the resource critical value, and performing the swap-out operation on the resources occupied by the idle process in the control group, so that the total resource value occupied by all processes in the control group is less than the resource threshold, the newly created process may be added into the control group that is not restricted by the resource threshold, and then the total resource value occupied by all processes in the control group may be compressed. The present invention thus solves the problem that the operating speed of the terminal is affected due to the long time delay of the swap-out operation performed by the terminal while adding the newly created process into the control group, and achieves the effect of reducing the time delay of the operation while compressing the memory.

It is to be understood that the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for optimizing memory, according to an exemplary embodiment.
Fig. 2 is a flow chart of a method for optimizing memory, according to another exemplary embodiment.
Fig. 3 is a block diagram of a device for optimizing memory, according to an exemplary embodiment.
Fig. 4 is a block diagram of a device for optimizing memory, according to an exemplary embodiment.
Fig. 5 is a block diagram of a device for optimizing memory, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

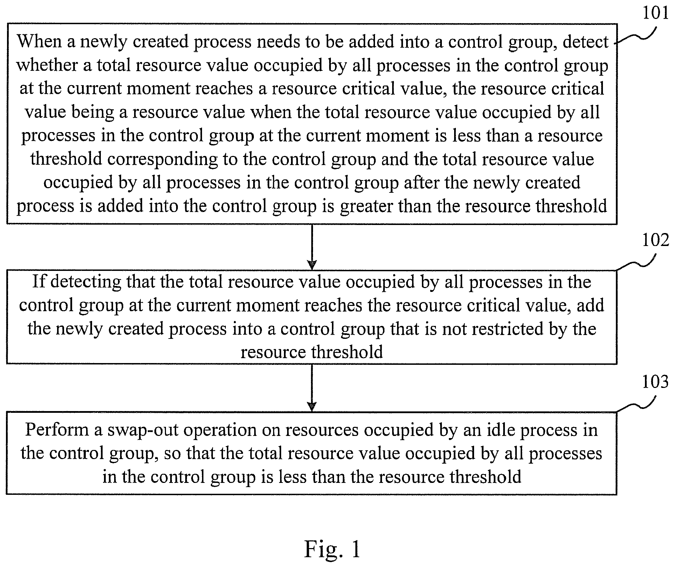

Fig. 1 is a flow chart of a method for optimizing memory, according to an exemplary embodiment. The method for optimizing memory is applied in a terminal. As shown in Fig. 1, the method for optimizing memory includes the following steps.

In step 101, when a newly created process needs to be added into a control group, whether a total resource value occupied by all processes in the control group at the current moment reaches a resource critical value is detected. This resource critical value is defined as a resource value so that the total resource value of memory resources occupied by all processes in the control group is at the current moment less than a predetermined resource threshold corresponding to the control group but becomes greater than the predetermined resource threshold if the newly created process is added into the control group.

The resource threshold is the maximum value of the total resources that can be occupied by all processes in the control group. When the total resource value occupied by all processes in the control group is greater than the resource threshold of the control group, the control group will perform a resource swap-out operation to compress the memory.

In step 102, if detecting that the total resource value occupied by all processes in the control group at the current moment reaches the resource critical value, the terminal adds the newly created process into a control group which is not restricted by the resource threshold.

When the control group is restricted by the resource threshold and the total resource value occupied by all processes reaches the resource critical value, the swap-out operation needs to be performed on resources occupied by idle processes in the control group while adding the newly created process into the control group, so as to ensure that the total resource value occupied by all processes in the control group after adding the newly created process is less than the resource threshold. However, performing the swap-out operation while adding the newly created process into the control group will cause a relatively long time delay of the swap-out operation and the adding operation, which affects the operating speed of the terminal; therefore, the terminal may add the newly created process into a control group not restricted by the resource threshold.

In step 103, a swap-out operation is performed on resources occupied by an idle process in the control group, so that the total resource value occupied by all processes in the control group is less than the resource threshold.

After adding the newly created process, since the total resource value occupied by all processes in the control group at the moment is greater than the resource threshold, the terminal also needs to perform a swap-out operation on the resources occupied by an idle process in the control group to compress the memory. The swap-out operation refers to an operation of compressing and transferring the resources occupied by the idle process in the control group to a virtual storage device.

In conclusion, through detecting whether the total resource value occupied by all processes in the control group at the current moment reaches the resource critical value while the newly created process needs to be added in the control group, adding the newly created process into the control group that is not restricted by the resource threshold if detecting that the total resource value occupied by all processes in the control group at the current moment reaches the resource critical value, and performing the swap-out operation on the resources occupied by the idle processes in the control group, so that the total resource value occupied by all processes in the control group is less than the resource threshold, the newly created process may be added into the control group that is not restricted by the resource threshold, and then the total resource value occupied by all processes in the control group is compressed. The method for optimizing memory provided by the present invention thus solves the problem that the operating speed of the terminal is affected due to the relatively long time delay of the swap-out operation performed by the terminal while adding the newly created process into the control group, and achieves the effect of reducing the time delay of the operation while compressing the memory.

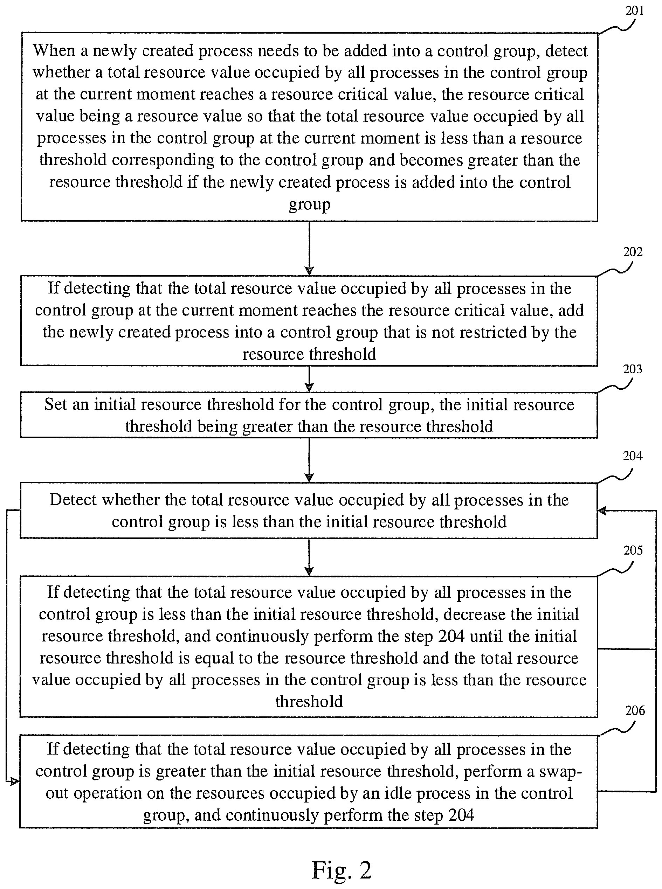

Fig. 2 is a flow chart of a method for optimizing memory, according to another exemplary embodiment. The method for optimizing memory is applied in a terminal. As shown in Fig. 2, the method for optimizing memory includes the following steps.

In step 201, when a newly created process needs to be added into a control group, whether a total resource value occupied by all processes in the control group at the current moment reaches a resource critical value is detected. The resource critical value is defined as a resource value so that the total resource value of memory resources occupied by all processes in the control group is at the current moment less than a predetermined resource threshold corresponding to the control group but becomes (i.e. is) greater than the predetermined resource threshold if the newly created process is added into the control group.

The resource threshold is the maximum value of the total resources that can be occupied by all processes in the control group. When the total resource value occupied by all processes in the control group is greater than the resource threshold of the control group, the control group will perform a resource swap-out operation to compress the memory.

The resource critical value is a resource value so that the total resource value of memory resources occupied by all processes in the control group at the current moment is less than a predetermined resource threshold corresponding to the control group but becomes greater than the predetermined resource threshold if the newly created process is added into the control group. For instance, the resource threshold corresponding to the control group is 500MB, and the total resource value occupied by all processes in the control group, into which the newly created process is to be added, is 480MB; at this moment, the total resource value (480M) is less than the resource threshold (500M); after the newly created process is added, the total resource value occupied by all processes in the control group is 520MB; at this moment, the total resource value (520M) is greater than the resource threshold (500M); and then a resource critical value of the control group is determined as 480MB.

In the embodiment, the control group may be a system control group. The system control group is a control group that is inherent to the system and is restricted by the resource threshold. The terminal may directly read the resource threshold of the system control group, and determine the resource threshold as a resource threshold corresponding to the control group.

In the embodiment, the control group may also be a non-system control group. The non-system control group is a control group that is created by the terminal and is not restricted by the resource threshold. The terminal may read a resource threshold of a system control group, and determine the resource threshold as a resource threshold corresponding to the non-system control group. That is, if the control group is a non-system control group that is not restricted by the resource threshold, then the method for optimizing memory provided by the present invention further includes: reading a resource threshold of a system control group, and determining the resource threshold as a resource threshold corresponding to the non-system control group.

In step 202, if detecting that the total resource value occupied by all processes in the control group at the current moment reaches the resource critical value, the newly created process is added into a control group not restricted by the resource threshold.

When the control group is restricted by the resource threshold and the total resource value occupied by all processes reaches the resource critical value, the swap-out operation needs to be performed on resources occupied by an idle process in the control group while adding the newly created process into the control group, so as to ensure that the total resource value occupied by all processes in the control group after adding the newly created process is less than the resource threshold. However, performing the swap-out operation while adding the newly created process into the control group will cause a relatively long time delay of the swap-out operation and the adding operation, which affects the operating speed of the terminal; therefore, the terminal may add the newly created process into the control group not restricted by the resource threshold.

The control group not restricted by the resource threshold may either be a control group obtained by cancelling the restriction of the resource threshold on the system control group restricted by the resource threshold, or be a non-system control group that is not restricted by the resource threshold and is created by the terminal.

If the control group is the system control group restricted by the resource threshold, then adding the newly created process into the control group not restricted by the resource threshold includes:
1) saving the resource threshold of the system control group;
2) cancelling the restriction of the resource threshold on the total resource value occupied by all processes in the system control group; and
3) adding the newly created process into the system control group.

The terminal saves the resource threshold of the system control group, cancels the restriction of the resource threshold on the total resources occupied by all processes in the system control group, so that the system control group becomes a control group not restricted by the resource threshold, and then the terminal adds the newly created process into the system control group not restricted by the resource threshold.

In step 203, an initial resource threshold is set for the control group, the initial resource threshold being greater than the resource threshold.

After adding the newly created process into the control group, since the total resource value occupied by all processes in the control group at the current moment is greater than the resource threshold, the terminal also needs to perform a swap-out operation on the resources occupied by the idle process in the control group to compress the memory. The swap-out operation refers to an operation of compressing and transferring the resources occupied by the idle process in the control group to a virtual storage device, wherein the virtual storage device may be a RAM (Random Access Memory).

In order to compress the total resources occupied by all processes in the control group, and avoid the problem of affecting the operating speed of the terminal caused by frequently performing the swap-out operation due to a relatively small resource threshold, the terminal may set a relatively large initial resource threshold for the control group, continuously decrease the initial resource threshold, and gradually compress the memory through decreasing the initial resource threshold.

In step 204, whether the total resource value occupied by all processes in the control group is greater than the initial resource threshold is detected.

After determining the initial resource threshold, the terminal detects whether the total resource value occupied by all processes in the control group is less than the initial resource threshold; if the total resource threshold is less than the initial resource threshold, which indicates that the initial resource threshold is set to be overlarge, then the initial resource threshold needs to be decreased, i.e., step 205 needs to be performed; and if the total resource threshold is greater than the initial resource threshold, then a swap-out operation needs to be performed, i.e., step 206 needs to be performed.

In step 205, if detecting that the total resource value occupied by all processes in the control group is less than the initial resource threshold, the initial resource threshold is decreased, and the step 204 is continuously performed until the initial resource threshold is equal to the resource threshold and the total resource value occupied by all processes in the control group is less than the resource threshold.

The step of decreasing the initial resource threshold, and continuously performing the step of detecting whether the total resource value occupied by all processes in the control group is less than the initial resource threshold until the initial resource threshold is equal to the resource threshold and the total resource value occupied by all processes in the control group is less than the resource threshold includes:
1) decreasing the initial resource threshold;
2) detecting whether a difference between the initial resource threshold after decrease and the resource threshold is less than a predetermined numerical value; and
3) if detecting that the difference is less than the predetermined numerical value, setting the initial resource threshold after decrease as the resource threshold, and continuously performing the step of detecting whether the total resource value occupied by all processes in the control group is less than the initial resource threshold until the total resource value occupied by all processes in the control group is less than the resource threshold.

The terminal decreases the initial resource threshold, and determines the obtained numerical value as the initial resource threshold after decrease. The initial resource threshold after decrease may either be obtained by decreasing the initial resource threshold before decrease by a fixed value, or be obtained through calculation according to the relationship between the initial resource threshold before decrease and the resource threshold.

When calculating the initial resource threshold after decrease according to the relationship between the initial resource threshold before decrease and the resource threshold, the terminal acquires a difference between the initial resource threshold after decrease and the resource threshold, and detects whether the difference is less than the predetermined numerical value. If detecting that the difference is greater than the predetermined numerical value, the terminal will set the initial resource threshold after decrease as a new initial resource threshold, and continuously perform the step of detecting whether the total resource value occupied by all processes in the control group is less than the initial resource threshold. If detecting that the difference is less than the predetermined numerical value, then the terminal will set the initial resource threshold after decrease as the resource threshold, and continuously perform the step of detecting whether the total resource value occupied by all processes in the control group is less than the initial resource threshold until the total resource value occupied by all processes in the control group is less than the resource threshold.

For example, the resource threshold of the control group is 500MB, the initial resource threshold is 900MB, and the predetermined numerical value is 150MB. The total resource value occupied by all processes in the control group detected by the terminal for the first time is 600MB. Since the total resource value 600MB is less than the initial resource threshold 900MB, the terminal performs an operation of decreasing the initial resource threshold, and determines that the initial resource threshold after decrease is 700MB according to a formula: the initial resource threshold after decrease = the initial resource threshold before decrease - (the initial resource threshold before decrease - the resource threshold)/2, and a difference between the initial resource threshold after decrease (700MB) and the resource threshold (500MB) is 200MB; since 200MB is greater than the predetermined numerical value (150MB), the terminal sets the initial resource threshold to 700MB, and continuously performs the step of detecting whether the total resource value occupied by all processes in the control group is less than the initial resource threshold.

If the total resource value occupied by all processes in the control group detected by the terminal for the second time is 500MB, since the total resource value (500MB) is less than the initial resource threshold (700MB), the terminal continuously determines that the initial resource threshold after decrease is 600MB according to the foregoing formula, and acquires that the difference between the initial resource threshold after decrease (600MB) and the resource threshold (500MB) is 100MB; since 100MB is less than the predetermined numerical value (150MB), the terminal sets the initial resource threshold after decrease as the resource threshold (500MB), and continuously performs the step of detecting whether the total resource value occupied by all processes in the control group is less than the initial resource threshold until the total resource value occupied by all processes in the control group is less than the initial resource threshold.

It should be illustrated that if the terminal detects that the total resource value occupied by all processes in the control group is greater than the initial resource threshold all the time within a predetermined detection time period, then the terminal repeatedly performs the swap-out operation on the resources occupied by the idle processes in the control group within the predetermined detection time period. Since few resources are occupied by the idle processes in the control group when the swap-out operation needs to be repeatedly performed, the swap-out operation may be suspended and performed again when more resources are occupied by the idle processes in the control group, thus avoiding the problem that the operating speed of the terminal is affected due to the swap-out operation repeatedly performed on the terminal when idle processes in the control group are few, and the memory may be gradually compressed through reducing the frequency for performing the swap-out operation, so as to increase the memory compression efficiency.

Therefore, the terminal may determine an operating error of decreasing the initial resource threshold when detecting that the total resource value occupied by all processes in the control group is greater than the initial resource threshold all the time within the predetermined detection time period. At this time, the method for optimizing memory provided by the embodiment further includes:
1) if an error occurs while decreasing the initial resource threshold, stopping modifying the initial resource threshold; and
2) after a predetermined time period, setting the initial resource threshold as the initial resource threshold before decrease, and continuously performing the step of detecting whether the total resource value occupied by all processes in the control group is less than the initial resource threshold.

The terminal, when detecting that an error occurs while decreasing the initial resource threshold, stops operating a thread of modifying the initial resource threshold within the predetermined time period, determines the initial resource threshold before decrease as the initial resource threshold, and continuously performs the step of detecting whether the total resource value occupied by all processes in the control group is less than the initial resource threshold.

For example, the terminal detects that the total resource value occupied by all processes in the control group is greater than the initial resource threshold all the time within a predetermined detection time period (3 minutes), then the terminal stops operating the thread of modifying the initial resource threshold, and starts timing. It is supposed that the initial resource threshold before decrease is 900MB and the predetermined time period is 1 minute, then after the timing reaches 1 minute, the terminal sets the initial resource threshold as the initial resource threshold before decrease (900MB), and continuously performs the step of detecting whether the total resource value occupied by all processes in the control group is less than the initial resource threshold.

In step 206, if detecting that the total resource value occupied by all processes in the control group is greater than the initial resource threshold, a swap-out operation is performed on the resources occupied by an idle process in the control group, and the step 204 is continuously performed.

For example, the terminal detects that the total resource value occupied by all processes in the control group is 900MB; since the total resource value (900MB) is greater than the initial resource threshold (500MB), the terminal performs the swap-out operation on the resources occupied by the idle process in the control group, compresses and stores the resources occupied by the idle process in the control group on a virtual device, and continuously performs the step of detecting whether the total resource value occupied by all processes in the control group is less than the initial resource threshold.

In conclusion, through detecting whether the total resource value occupied by all processes in the control group at the current moment reaches the resource critical value while the newly created process needs to be added in the control group, adding the newly created process into the control group that is not restricted by the resource threshold if detecting that the total resource value occupied by all processes in the control group at the current moment reaches the resource critical value, and performing the swap-out operation on the resources occupied by the idle processes in the control group, so that the total resource value occupied by all processes in the control group is less than the resource threshold, the newly created process may be added into the control group that is not restricted by the resource threshold, and then the total resource value occupied by all processes in the control group is compressed, the method for optimizing memory provided by the present invention solves the problem that the operating speed of the terminal is affected due to the relatively long time delay of the swap-out operation performed by the terminal while adding the newly created process into the control group, and achieves the effect of reducing the time delay of the operation while compressing the memory.

Moreover, through stopping modifying the initial resource threshold when an error occurs while decreasing the initial resource threshold, and setting the initial resource threshold as the initial resource threshold before decrease after a predetermined time period, the present invention avoids the problem that the operating speed of the terminal is affected due to the swap-out operation repeatedly performed on the terminal when idle processes in the control group are few, and may gradually compress the memory through reducing the frequency for performing the swap-out operation so as to increase the memory compression efficiency.

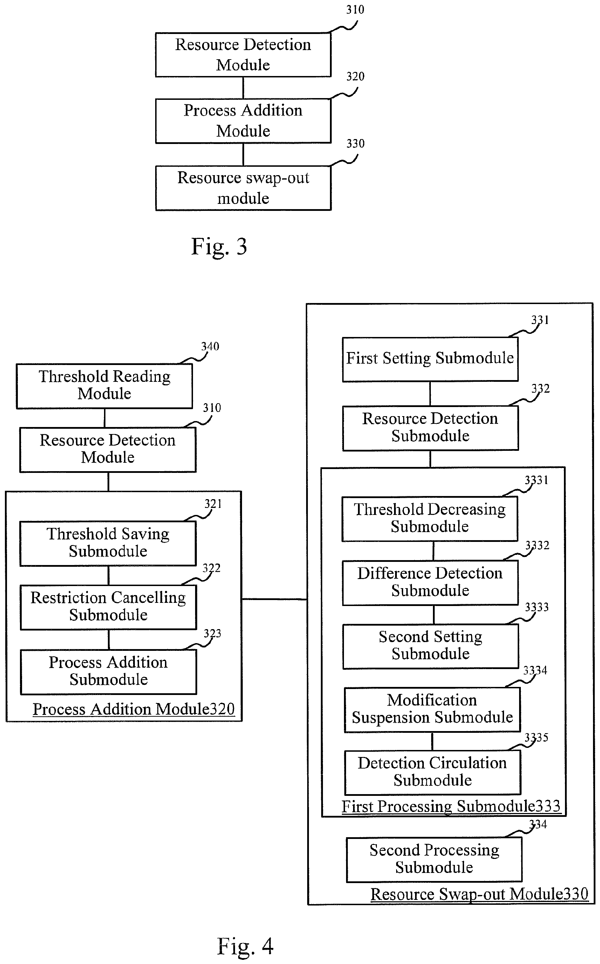

Fig. 3 is a block diagram of a device for optimizing memory, according to an exemplary embodiment. The device for optimizing memory is applied in a terminal. As shown in Fig. 3, the device for optimizing memory includes: a resource detection module 310, a process addition module 320 and a resource swap-out module 330.

The resource detection module 310 is configured to, when a newly created process needs to be added into a control group, detect whether a total resource value occupied by all processes in the control group at the current moment reaches a resource critical value. The resource critical value is defined as a resource value so that the total resource value of memory resources occupied by all processes in the control group is at the current moment less than a predetermined resource threshold corresponding to the control group but becomes greater than the predetermined resource threshold if the newly created process is added into the control group.

The process addition module 320 is configured to, when the resource detection module detects that the total resource value occupied by all processes in the control group at the current moment reaches the resource critical value, add the newly created process into a control group that is not restricted by the resource threshold.

The resource swap-out module 330 is configured to perform a swap-out operation on resources occupied by an idle process in the control group into which the newly created process is added by the process addition module, so that the total resource value occupied by all processes in the control group is less than the resource threshold.

In conclusion, through detecting whether the total resource value occupied by all processes in the control group at the current moment reaches the resource critical value while the newly created process needs to be added in the control group, adding the newly created process into the control group that is not restricted by the resource threshold if detecting that the total resource value occupied by all processes in the control group at the current moment reaches the resource critical value, and performing the swap-out operation on the resources occupied by the idle processes in the control group, so that the total resource value occupied by all processes in the control group is less than the resource threshold, the newly created process may be added into the control group that is not restricted by the resource threshold, and then the total resource value occupied by all processes in the control group is compressed. The device for optimizing memory provided by the present invention thus solves the problem that the operating speed of the terminal is affected due to the relatively long time delay of the swap-out operation performed by the terminal while adding the newly created process into the control group, and achieves the effect of reducing the time delay of the operation while compressing the memory.

Fig. 4 is a block diagram of a device for optimizing memory, according to an exemplary embodiment. The device for optimizing memory is applied in a terminal. As shown in Fig. 4, the device for optimizing memory includes: a resource detection module 310, a process addition module 320 and a resource swap-out module 330.

The resource detection module 310 is configured to, when a newly created process needs to be added into a control group, detect whether a total resource value occupied by all processes in the control group at the current moment reaches a resource critical value, the resource critical value being a resource value when the total resource value occupied by all processes in the control group at the current moment is less than a resource threshold corresponding to the control group and the total resource value occupied by all processes in the control group after the newly created process is added into the control group is greater than the resource threshold.

The process addition module 320 is configured to, when the resource detection module 310 detects that the total resource value occupied by all processes in the control group at the current moment reaches the resource critical value, add the newly created process into a control group that is not restricted by the resource threshold.

The resource swap-out module 330 is configured to perform a swap-out operation on resources occupied by an idle process in the control group into which the newly created process is added by the process addition module 320, so that the total resource value occupied by all processes in the control group is less than the resource threshold.

Optionally, when the control group is a system control group restricted by the resource threshold, the process addition module 320 includes: a threshold saving submodule 321, a restriction cancelling submodule 322 and a process addition submodule 323.

The threshold saving submodule 321 is configured to save the resource threshold of the system control group.

The restriction cancelling submodule 322 is configured to cancel the restriction of the resource threshold on a total resource value occupied by all processes in the system control group.

The process addition submodule 323 is configured to add the newly created process into the system control group.

Optionally, if the control group is a non-system control group that is not restricted by the resource threshold, then the device further includes: a threshold reading module 340.

The threshold reading module 340 is configured to read a resource threshold of a system control group, and determine the resource threshold as a resource threshold corresponding to the non-system control group.

Optionally, resource swap-out module 330 includes: a first setting submodule 331, a resource detection submodule 332, a first processing submodule 333 and a second processing submodule 334.

The first setting submodule 331 is configured to set an initial resource threshold for the control group, the initial resource threshold being greater than the resource threshold.

The resource detection submodule 332 is configured to detect whether the total resource value occupied by all processes in the control group is less than the initial resource threshold set by the first setting submodule 331.

The first processing submodule 333 is configured to, when the resource detection submodule 332 detects that the total resource value occupied by all processes in the control group is less than the initial resource threshold, decrease the initial resource threshold, and continuously perform the step of detecting whether the total resource value occupied by all processes in the control group is less than the initial resource threshold until the initial resource threshold is equal to the resource threshold and the total resource value occupied by all processes in the control group is less than the resource threshold.

The second processing submodule 334 is configured to, when the resource detection submodule 332 detects that the total resource value occupied by all processes in the control group is greater than the initial resource threshold, perform a swap-out operation on the resources occupied by the idle processes in the control group, and continuously perform the step of detecting whether the total resource value occupied by all processes in the control group is less than the initial resource threshold.

Optionally, the first processing submodule 333 includes: a threshold decreasing submodule 3331, a difference detection submodule 3332 and a second setting submodule 3333.

The threshold decreasing submodule 3331 is configured to decrease the initial resource threshold.

The difference detection submodule 3332 is configured to detect whether a difference between the initial resource threshold after being decreased by the threshold decreasing submodule 3331 and the resource threshold is less than a predetermined numerical value.

The second setting submodule 3333 is configured to, when the difference detection submodule 3332 detects that the difference is less than the predetermined numerical value, set the initial resource threshold after decrease as the resource threshold, and continuously perform the step of detecting whether the total resource value occupied by all processes in the control group is less than the initial resource threshold until the total resource value occupied by all processes in the control group is less than the resource threshold.

Optionally, the first processing submodule 333 further includes: a modification suspension submodule 3334 and a detection circulation submodule 3335.

The modification suspension submodule 3334 is configured to, when an error occurs while decreasing the initial resource threshold, stop modifying the initial resource threshold.

The detection circulation submodule 3335 is configured to, after a predetermined time period, set the initial resource threshold as the initial resource threshold before decrease, and continuously perform the step of detecting whether the total resource value occupied by all processes in the control group is less than the initial resource threshold.

In conclusion, through detecting whether the total resource value occupied by all processes in the control group at the current moment reaches the resource critical value while the newly created process needs to be added in the control group, adding the newly created process into the control group that is not restricted by the resource threshold if detecting that the total resource value occupied by all processes in the control group at the current moment reaches the resource critical value, and performing the swap-out operation on the resources occupied by the idle processes in the control group, so that the total resource value occupied by all processes in the control group is less than the resource threshold, the newly created process may be added into the control group that is not restricted by the resource threshold, and then the total resource value occupied by all processes in the control group is compressed, the device for optimizing memory provided by the present invention solves the problem that the operating speed of the terminal is affected due to the relatively long time delay of the swap-out operation performed by the terminal while adding the newly created process into the control group, and achieves the effect of reducing the time delay of the operation while compressing the memory.

Moreover, through stopping modifying the initial resource threshold when an error occurs while decreasing the initial resource threshold, and setting the initial resource threshold into the initial resource threshold before decrease after a predetermined time period, the present invention avoids the problem that the operating speed of the terminal is affected due to the swap-out operation repeatedly performed on the terminal when idle processes in the control group are few, and may gradually compress the memory through reducing the frequency for performing the swap-out operation to increase the memory compression efficiency.

With respect to the devices in the above embodiments, the specific manners for performing operations for individual modules therein have been described in detail in the embodiments regarding the methods, which will not be elaborated herein.

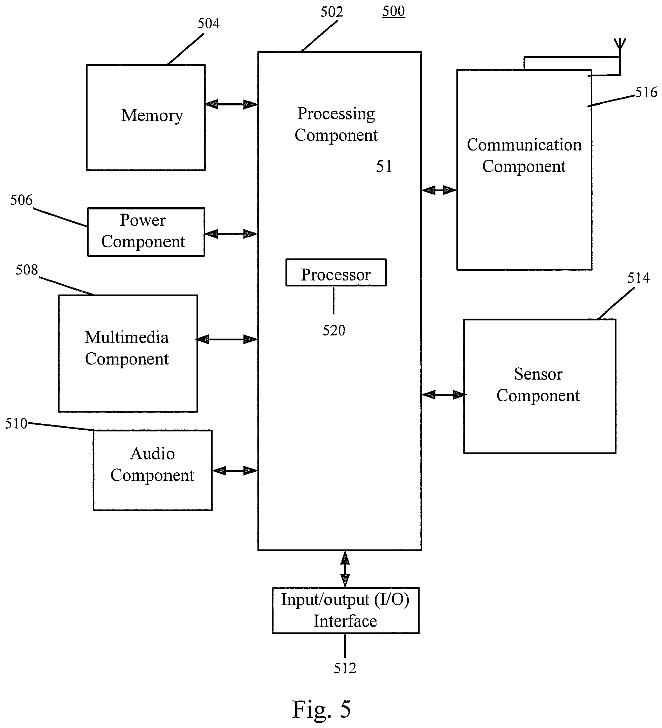

Fig. 5 is a block diagram of a device 500 for optimizing memory, according to an exemplary embodiment. For example, the device 500 may be a mobile phone, a computer, a digital broadcast terminal, a messaging device, a gaming console, a tablet, a medical device, exercise equipment, a personal digital assistant, and the like.

Referring to Fig. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and/or the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 504, executable by the processor 520 in the device 500, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art.

It will be appreciated that the present invention is not limited to the exact construction that has been described above and illustrated in the accompanying drawings, and that various modifications and changes can be made without departing from the scope thereof.

## Claims

1. A method for optimizing memory, comprising:
when a newly created process needs to be added into a system control group, detecting (101, 201) whether a total resource value occupied by all processes in the control group at a current moment reaches a resource critical value, the resource critical value being a resource value so that the total resource value of memory resources occupied by all processes in the control group is at the current moment less than a resource threshold corresponding to the control group and becomes greater than the resource threshold if the newly created process is added into the control group;
if detecting that the total resource value occupied by all processes in the control group at the current moment reaches the resource critical value:
- saving the resource threshold of the control group;
- cancelling restriction of the resource threshold on the total resource value occupied by all processes in the control group;
- adding (102, 202) the newly created process into the control group that is not restricted by the resource threshold; and
- performing (103) a swap-out operation on resources occupied by an idle process in the control group, so that the total resource value occupied by all processes in the control group is less than the resource threshold.

2. The method according to claim 1, **characterized in that**, performing (103) the swap-out operation on the resources occupied by the idle process in the control group, so that the total resource value occupied by all processes in the control group is less than the resource threshold comprises:
setting (203) an initial resource threshold for the control group, the initial resource threshold being greater than the resource threshold;
detecting (204) whether the total resource value occupied by all processes in the control group is less than the initial resource threshold;
if detecting that the total resource value occupied by all processes in the control group is less than the initial resource threshold, decreasing (205) the initial resource threshold, and continuously performing the step of detecting whether the total resource value occupied by all processes in the control group is less than the initial resource threshold until the initial resource threshold is equal to the resource threshold and the total resource value occupied by all processes in the control group is less than the resource threshold; and
if detecting that the total resource value occupied by all processes in the control group is greater than the initial resource threshold, performing (206) a swap-out operation on the resources occupied by the idle process in the control group, and continuously performing the step of detecting whether the total resource value occupied by all processes in the control group is less than the initial resource threshold.

3. The method according to claim 2, **characterized in that**, decreasing (205) the initial resource threshold, and continuously performing the step of detecting whether the total resource value occupied by all processes in the control group is less than the initial resource threshold until the initial resource threshold is equal to the resource threshold and the total resource value occupied by all processes in the control group is less than the resource threshold comprises:
decreasing the initial resource threshold;
detecting whether a difference between the initial resource threshold after decrease and the resource threshold is less than a predetermined numerical value; and
if detecting that the difference is less than the predetermined numerical value, setting the initial resource threshold after decrease as the resource threshold, and continuously performing the step of detecting whether the total resource value occupied by all processes in the control group is less than the initial resource threshold until the total resource value occupied by all processes in the control group is less than the resource threshold.

4. The method according to claim 2, **characterized in that**, the method further comprises:
if an error occurs while decreasing the initial resource threshold, stopping modifying the initial resource threshold; and
after a predetermined time period, setting the initial resource threshold as the initial resource threshold before decrease, and continuously performing the step of detecting whether the total resource value occupied by all processes in the control group is less than the initial resource threshold.

5. A device for optimizing memory, comprising:
a resource detection module (310) configured to, when a newly created process needs to be added into a system control group, detect whether a total resource value occupied by all processes in the control group at a current moment reaches a resource critical value, the resource critical value being a resource value so that the total resource value of memory resources occupied by all processes in the control group is at the current moment less than a resource threshold corresponding to the control group and becomes greater than the resource threshold if the newly created process is added into the control group;
a process addition module (320) configured to, if the resource detection module detects that the total resource value occupied by all processes in the control group at the current moment reaches the resource critical value:
- save the resource threshold of the control group by a threshold saving submodule (321) of the process addition module (320);
- cancel restriction of the resource threshold on the total resource value occupied by all processes in the control group by a restriction cancelling submodule (322) of the process addition module (320); and
- add the newly created process into the control group that is not restricted by the resource threshold by a process addition submodule (323) of the process addition module (320);
a resource swap-out module (330) configured to perform a swap-out operation on resources occupied by an idle process in the control group into which the newly created process is added by the process addition module, so that the total resource value occupied by all processes in the control group is less than the resource threshold;

6. The device according to claim 5, **characterized in that**, the resource swap-out module (330) comprises:
a first setting submodule (331) configured to set an initial resource threshold for the control group, the initial resource threshold being greater than the resource threshold;
a resource detection submodule (332) configured to detect whether the total resource value occupied by all processes in the control group is less than the initial resource threshold set by the first setting submodule;
a first processing submodule (333) configured to, when the resource detection submodule detects that the total resource value occupied by all processes in the control group is less than the initial resource threshold, decrease the initial resource threshold, and continuously perform the operation of detecting whether the total resource value occupied by all processes in the control group is less than the initial resource threshold until the initial resource threshold is equal to the resource threshold and the total resource value occupied by all processes in the control group is less than the resource threshold; and
a second processing submodule (334) configured to, when the resource detection submodule detects that the total resource value occupied by all processes in the control group is greater than the initial resource threshold, perform a swap-out operation on the resources occupied by the idle process in the control group, and continuously perform the operation of detecting whether the total resource value occupied by all processes in the control group is less than the initial resource threshold.

7. The device according to claim 6, **characterized in that**, the first processing submodule (333) comprises:
a threshold decreasing submodule (3331) configured to decrease the initial resource threshold;
a difference detection submodule (3331) configured to detect whether a difference between the initial resource threshold decreased by the threshold decreasing submodule and the resource threshold is less than a predetermined numerical value; and
a second setting submodule (3332) configured to, when the difference detection submodule detects that the difference is less than the predetermined numerical value, set the initial resource threshold after decrease as the resource threshold, and continuously perform the operation of detecting whether the total resource value occupied by all processes in the control group is less than the initial resource threshold until the total resource value occupied by all processes in the control group is less than the resource threshold.

8. The device according to claim 6, **characterized in that**, the first processing submodule (333) further comprises:
a modification suspension submodule (3334) configured to, when an error occurs while decreasing the initial resource threshold, stop modifying the initial resource threshold; and
a detection circulation submodule (3335) configured to, after a predetermined time period, set the initial resource threshold as the initial resource threshold before decrease, and continuously perform the operation of detecting whether the total resource value occupied by all processes in the control group is less than the initial resource threshold.

9. A computer program comprising computer readable instructions, which when executed by a processor of a terminal, causes the terminal to perform a method according to any one of claims 1 to 4.

10. A non-transitory computer readable storage medium including 2. instructions which, when executed by a processor of a terminal, cause the terminal to perform a method according to any one of claims 1 to 4.

## Patentansprüche

1. Verfahren zur Speicheroptimierung, umfassend:
wenn ein neu erstellter Prozess in eine Systemsteuergruppe hinzugefügt werden muss, Detektieren (101, 201), ob ein Gesamtressourcenwert, der von allen Prozessen in der Steuergruppe in einem aktuellen Moment belegt wird, einen kritischen Ressourcenwert erreicht, wobei der kritische Ressourcenwert ein Ressourcenwert ist, so dass der Gesamtressourcenwert von Speicherressourcen, die von allen Prozessen in der Steuergruppe belegt werden, in dem aktuellen Moment kleiner als ein der Steuergruppe entsprechender Ressourcenschwellenwert ist, und größer als der Ressourcenschwellenwert wird, wenn der neu erstellte Prozess in die Steuergruppe hinzugefügt wird,
wenn festgestellt wird, dass der Gesamtwert der von allen Prozessen in der Steuergruppe belegten Ressourcen im aktuellen Moment den kritischen Ressourcenwert erreicht,
- Sichern des Ressourcenschwellenwert der Steuergruppe,
- Aufheben der Beschränkung des Ressourcenschwellenwerts auf den von allen Prozessen in der Steuergruppe belegten Gesamtwert der Ressourcen,
- Hinzufügen (102, 202) des neu erstellten Prozesses in die Steuergruppe, die nicht durch den Ressourcenschwellenwert eingeschränkt ist, und
- Durchführen (103) eines Auslagerungsvorgangs von Ressourcen, die von einem inaktiven Prozess in der Steuergruppe belegt werden, so dass der gesamte Ressourcenwert, der von allen Prozessen in der Steuergruppe belegt wird, kleiner als der Ressourcenschwellenwert ist.

2. Verfahren nach Anspruch 1, **dadurch gekennzeichnet, dass** das Durchführen (103) der Auslagerungsoperation an den Ressourcen, die von dem inaktiven Prozess in der Steuergruppe belegt werden, so dass der gesamte Ressourcenwert, der von allen Prozessen in der Steuergruppe belegt ist, kleiner als der Ressourcenschwellenwert ist, umfasst:
Einstellen (203) eines anfänglichen Ressourcenschwellenwerts für die Steuergruppe, wobei der anfängliche Ressourcenschwellenwert größer ist als der Ressourcenschwellenwert,
Detektieren (204), ob der gesamte Ressourcenwert, der von allen Prozessen in der Steuergruppe belegt wird, kleiner ist als der anfängliche Ressourcenschwellenwert,
wenn detektiert wird, dass der von allen Prozessen in der Steuergruppe belegte Gesamtressourcenwert kleiner als der anfängliche Ressourcenschwellenwert ist, Verringern (205) des anfänglichen Ressourcenschwellenwerts und kontinuierliches Durchführen des Schritts des Detektierens, ob der von allen Prozessen in der Steuergruppe belegte Gesamtressourcenwert kleiner als der anfängliche Ressourcenschwellenwert ist, bis der anfängliche Ressourcenschwellenwert gleich dem Ressourcenschwellenwert ist und der von allen Prozessen in der Steuergruppe belegte Gesamtressourcenwert kleiner als der Ressourcenschwellenwert ist, und
wenn detektiert wird, dass der Gesamtressourcenwert, der von allen Prozessen in der Steuergruppe belegt wird, größer ist als der anfängliche Ressourcenschwellenwert, Durchführen (206) einer Auslagerungsoperation an den Ressourcen, die von dem inaktiven Prozess in der Steuergruppe belegt werden, und kontinuierliches Durchführen des Schritts des Detektierens, ob der Gesamtressourcenwert, der von allen Prozessen in der Steuergruppe belegt wird, kleiner ist als der anfängliche Ressourcenschwellenwert.

3. Verfahren nach Anspruch 2, **dadurch gekennzeichnet, dass** das Verringern (205) des anfänglichen Ressourcenschwellenwerts und das kontinuierliche Durchführen des Schritts des Detektierens, ob der von allen Prozessen in der Steuergruppe belegte Gesamtressourcenwert kleiner als der anfängliche Ressourcenschwellenwert ist, bis der anfängliche Ressourcenschwellenwert gleich dem Ressourcenschwellenwert ist und der von allen Prozessen in der Steuergruppe belegte Gesamtressourcenwert kleiner als der Ressourcenschwellenwert ist, umfasst:
Verringern des anfänglichen Ressourcenschwellenwerts,
Detektieren, ob eine Differenz zwischen dem anfänglichen Ressourcenschwellenwert nach dem Verringern und dem Ressourcenschwellenwert kleiner als ein vorbestimmter numerischer Wert ist, und
wenn detektiert wird, dass die Differenz kleiner als der vorbestimmte numerische Wert ist, Einstellen des anfänglichen Ressourcenschwellenwerts nach dem Verringern als Ressourcenschwellenwert und kontinuierliches Durchführen des Schritts des Detektierens, ob der gesamte Ressourcenwert, der von allen Prozessen in der Steuergruppe belegt wird, kleiner als der anfängliche Ressourcenschwellenwert ist, bis der gesamte Ressourcenwert, der von allen Prozessen in der Steuergruppe belegt wird, kleiner als der Ressourcenschwellenwert ist.

4. Verfahren nach Anspruch 2, **dadurch gekennzeichnet, dass** das Verfahren ferner umfasst:
wenn ein Fehler auftritt, während der anfängliche Ressourcenschwellenwertverringert wird, Stoppen der Änderung des anfänglichen Ressourcenschwellenwertes, und
nach einer vorbestimmten Zeitspanne, Einstellen des anfänglichen Ressourcenschwellenwerts als den anfänglichen Ressourcenschwellenwert vor dem Verringern und kontinuierliches Ausführen des Schritts des Detektierens, ob der von allen Prozessen in der Steuergruppe belegte Gesamtressourcenwert kleiner als der anfängliche Ressourcenschwellenwert ist.

5. Vorrichtung zur Speicheroptimierung, umfassend:
ein Ressourcendetektionsmodul (310), das dazu konfiguriert ist, wenn ein neu erzeugter Prozess in eine Systemsteuergruppe hinzugefügt werden muss, zu detektieren, ob ein Gesamtressourcenwert, der von allen Prozessen in der Steuergruppe in einem aktuellen Moment belegt wird, einen kritischen Ressourcenwert erreicht, wobei der kritische Ressourcenwert ein Ressourcenwert ist, so dass der Gesamtressourcenwert von Speicherressourcen, die von allen Prozessen in der Steuergruppe belegt werden, in dem aktuellen Moment kleiner ist als ein Ressourcenschwellenwert, der der Steuergruppe entspricht, und größer wird als der Ressourcenschwellenwert, wenn der neu erzeugte Prozess in die Steuergruppe hinzugefügt wird,
ein Prozessadditionsmodul (320), das dazu konfiguriert ist, wenn das Ressourcendetektionsmodul detektiert, dass der Gesamtressourcenwert, der von allen Prozessen in der Steuergruppe im aktuellen Moment belegt wird, den kritischen Ressourcenwert erreicht:
- den Ressourcenschwellenwerts der Steuergruppe mittels eines Schwellenwertspeicher-Submoduls (321) des Prozessadditionsmoduls (320) zu speichern,
- die Beschränkung des Ressourcenschwellenwerts auf den von allen Prozessen in der Steuergruppe belegten Gesamtressourcenwert durch ein Beschränkungsaufhebungs-Submodul (322) des Prozessadditionsmoduls (320) aufzuheben, und
- den neu erstellten Prozess durch ein Prozessadditions-Submodul (323) des Prozessadditionsmoduls (320) in die Steuergruppe hinzufügen, die nicht durch die Ressourcenschwellenwert eingeschränkt ist,
ein Ressourcenauslagerungsmodul (330), das dazu konfiguriert ist, eine Auslagerungsoperation an Ressourcen durchzuführen, die von einem inaktiven Prozess in der Steuergruppe belegt sind, zu der der neu erzeugte Prozess durch das Prozessadditionsmodul hinzugefügt wird, so dass der gesamte Ressourcenwert, der von allen Prozessen in der Steuergruppe belegt wird, kleiner als der Ressourcenschwellenwert ist.

6. Vorrichtung nach Anspruch 5, **dadurch gekennzeichnet, dass** das Ressourcenauslagerungsmodul (330) umfasst:
ein erstes Einstellungs-Submodul (331), das dass es, konfiguriert ist, einen anfänglichen Ressourcenschwellenwert für die Steuergruppe einzustellen, wobei der anfängliche Ressourcenschwellenwert größer als der Ressourcenschwellenwert ist,
ein Ressourcendetektions-Submodul (332), das dazu konfiguriert ist, zu detektieren, ob der Gesamtressourcenwert, der von allen Prozessen in der Steuergruppe belegt wird, kleiner ist als der anfängliche Ressourcenschwellenwert, der von dem ersten Einstellungs-Submodul eingestellt wurde,
ein erstes Verarbeitungs-Submodul (333), das dazu konfiguriert ist, wenn das Ressourcendetektions-Submodul detektiert, dass der Gesamtressourcenwert, der von allen Prozessen in der Steuergruppe belegt wird, kleiner als der anfängliche Ressourcenschwellenwert ist, den anfänglichen Ressourcenschwellenwert zu verringern und kontinuierlich den Vorgang des Detektierens durchzuführen, ob der Gesamtressourcenwert, der von allen Prozessen in der Steuergruppe belegt wird, kleiner als der anfängliche Ressourcenschwellenwert ist, bis der anfängliche Ressourcenschwellenwert gleich dem Ressourcenschwellenwert ist und der Gesamtressourcenwert, der von allen Prozessen in der Steuergruppe belegt wird, kleiner als der Ressourcenschwellenwert ist, und
ein zweites Verarbeitungs-Submodul (334), das dazu konfiguriert ist, wenn das Ressourcendetektions-Submodul detektiert, dass der Gesamtressourcenwert, der von allen Prozessen in der Steuergruppe belegt wird, größer ist als der anfängliche Ressourcenschwellenwert, eine Auslagerungsoperation an den Ressourcen durchzuführen, die von dem inaktiven Prozess in der Steuergruppe belegt werden, und kontinuierlich die Operation des Detektierens durchzuführen, ob der Gesamtressourcenwert, der von allen Prozessen in der Steuergruppe belegt wird, kleiner ist als der anfängliche Ressourcenschwellenwert.

7. Vorrichtung nach Anspruch 6, **dadurch gekennzeichnet, dass** das erste Verarbeitungs-Submodul (333) umfasst:
ein Submodul (3331) zum Verringern des Schwellenwerts, das dazu konfiguriert ist, den anfänglichen Ressourcenschwellenwert zu verringern,
ein Differenzdetektions-Submodul (3331), das dazu konfiguriert ist, zu detektieren, ob eine Differenz zwischen dem anfänglichen Ressourcenschwellenwert, der durch das Schwellenwertverringerungs-Submodul verringert wurde, und dem Ressourcenschwellenwert kleiner als ein vorbestimmter numerischer Wert ist, und
ein zweites Einstellungs-Submodul (3332), das dazu konfiguriert ist, wenn das Differenzdetektions-Submodul detektiert, dass die Differenz kleiner als der vorbestimmte numerische Wert ist, den anfänglichen Ressourcenschwellenwert nach dem Verringern als den Ressourcenschwellenwert einzustellen und kontinuierlich den Vorgang des Detektierens durchzuführen, ob der von allen Prozessen in der Steuergruppe belegte Gesamtressourcenwert kleiner als der anfängliche Ressourcenschwellenwert ist, bis der von allen Prozessen in der Steuergruppe belegte Gesamtressourcenwert kleiner als der Ressourcenschwellenwert ist.

8. Vorrichtung nach Anspruch 6, **dadurch gekennzeichnet, dass** das erste Verarbeitungs-Submodul (333) ferner umfasst:
ein Modifizierungsunterbrechungs-Submodul (3334), das dazu konfiguriert ist, bei Auftreten eines Fehlers während des Verringerns des anfänglichen Ressourcenschwellenwerts die Modifizierung des anfänglichen Ressourcenschwellenwerts zu stoppen, und
ein Detektionszirkulations-Submodul (3335), das dazu konfiguriert ist, nach einer vorbestimmten Zeitspanne den anfänglichen Ressourcenschwellenwert als den anfänglichen Ressourcenschwellenwert vor dem Verringern einzustellen und kontinuierlich den Vorgang des Detektierens durchzuführen, ob der von allen Prozessen in der Steuergruppe belegte Gesamtressourcenwert kleiner als der anfängliche Ressourcenschwellenwert ist.

9. Computerprogramm mit computerlesbaren Befehlen, das, wenn es von einem Prozessor eines Endgeräts ausgeführt wird, das Endgerät veranlasst, ein Verfahren nach einem der Ansprüche 1 bis 4 durchzuführen.

10. Nicht-transitorisches computerlesbares Speichermedium, das Anweisungen enthält, die, wenn sie von einem Prozessor eines Endgeräts ausgeführt werden, das Endgerät veranlassen, ein Verfahren nach einem der Ansprüche 1 bis 4 durchzuführen.

## Revendications

1. Procédé d'optimisation de mémoire, comprenant les étapes suivantes :
lorsqu'un processus nouvellement créé doit être ajouté dans un groupe de commande de système, détecter (101, 201) si une valeur de ressources totales occupées par tous les processus dans le groupe de commande à un moment actuel atteint une valeur critique de ressources, la valeur critique de ressources étant une valeur de ressources telle que la valeur de ressources totales des ressources de mémoire occupées par tous les processus dans le groupe de commande est au moment actuel inférieure à un seuil de ressources correspondant au groupe de commande et devient supérieure au seuil de ressources si le processus nouvellement créé est ajouté dans le groupe de commande ;
s'il est détecté que la valeur de ressources totales occupées par tous les processus dans le groupe de commande au moment actuel atteint la valeur critique de ressources :
- sauvegarder le seuil de ressources du groupe de commande ;
- annuler la restriction, par le seuil de ressources, de la valeur de ressources totales occupées par tous les processus dans le groupe de commande ;
- ajouter (102, 202) le processus nouvellement créé, dans le groupe de commande qui n'est pas restreint par le seuil de ressources ; et
- réaliser (103) une opération de permutation sur des ressources occupées par un processus inactif dans le groupe de commande, de manière que la valeur de ressources totales occupées par tous les processus dans le groupe de commande soit inférieure au seuil de ressources.

2. Procédé selon la revendication 1, **caractérisé en ce que** la réalisation (103) de l'opération de permutation sur les ressources occupées par le processus inactif dans le groupe de commande, de manière que la valeur de ressources totales occupées par tous les processus dans le groupe de commande soit inférieure au seuil de ressources comprend les étapes suivantes :
régler (203) un seuil de ressources initial du groupe de commande, le seuil de ressources initial étant supérieur au seuil de ressources ;
détecter (204) si la valeur de ressources totales occupées par tous les processus dans le groupe de commande est inférieure au seuil de ressources initial ;
s'il est détecté que la valeur de ressources totales occupées par tous les processus dans le groupe de commande est inférieure au seuil de ressources initial, réduire (205) le seuil de ressources initial, et réaliser en continu l'étape consistant à détecter si la valeur de ressources totales occupées par tous les processus dans le groupe de commande est inférieure au seuil de ressources initial, jusqu'à ce que le seuil de ressources initial soit égal au seuil de ressources et que la valeur de ressources totales occupées par tous les processus dans le groupe de commande soit inférieure au seuil de ressources ; et
s'il est détecté que la valeur de ressources totales occupées par tous les processus dans le groupe de commande est supérieure au seuil de ressources initial, réaliser (206) une opération de permutation sur les ressources occupées par le processus inactif dans le groupe de commande, et réaliser en continu l'étape consistant à détecter si la valeur de ressources totales occupées par tous les processus dans le groupe de commande est inférieure au seuil de ressources initial.

3. Procédé selon la revendication 2, **caractérisé en ce que** la réduction (205) du seuil de ressources initial et la réalisation en continu de l'étape consistant à détecter si la valeur de ressources totales occupées par tous les processus dans le groupe de commande est inférieure au seuil de ressources initial, jusqu'à ce que le seuil de ressources initial soit égal au seuil de ressources et que la valeur de ressources totales occupées par tous les processus dans le groupe de commande soit inférieure au seuil de ressources, comprennent les étapes suivantes :
réduire le seuil de ressources initial ;
détecter si une différence entre le seuil de ressources initial après réduction et le seuil de ressources est inférieure à une valeur numérique prédéterminée ; et
s'il est détecté que la différence est inférieure à la valeur numérique prédéterminée, régler le seuil de ressources initial après réduction en tant que seuil de ressources, et réaliser en continu l'étape consistant à détecter si la valeur de ressources totales occupées par tous les processus dans le groupe de commande est inférieure au seuil de ressources initial, jusqu'à ce que la valeur de ressources totales occupées par tous les processus dans le groupe de commande soit inférieure au seuil de ressources.

4. Procédé selon la revendication 2, **caractérisé en ce que** le procédé comprend en outre les étapes suivantes :
si une erreur se produit lors de la réduction du seuil de ressources initial, cesser de modifier le seuil de ressources initial ; et
après une période de temps prédéterminée, régler le seuil de ressources initial en tant que seuil de ressources initial avant réduction, et réaliser en continu l'étape consistant à détecter si la valeur de ressources totales occupées par tous les processus dans le groupe de commande est inférieure au seuil de ressources initial.

5. Dispositif d'optimisation de mémoire, comprenant :
un module de détection de ressources (310) conçu pour, lorsqu'un processus nouvellement créé doit être ajouté dans un groupe de commande de système, détecter si une valeur de ressources totales occupées par tous les processus dans le groupe de commande à un moment actuel atteint une valeur critique de ressources, la valeur critique de ressources étant une valeur de ressources telle que la valeur de ressources totales des ressources de mémoire occupées par tous les processus dans le groupe de commande est au moment actuel inférieure à un seuil de ressources correspondant au groupe de commande et devient supérieure au seuil de ressources si le processus nouvellement créé est ajouté dans le groupe de commande ;
un module d'ajout de processus (320) conçu pour, si le module de détection de ressources détecte que la valeur de ressources totales occupées par tous les processus dans le groupe de commande au moment actuel atteint la valeur critique de ressources :
- sauvegarder le seuil de ressources du groupe de commande, au moyen d'un sous-module de sauvegarde de seuil (321) du module d'ajout de processus (320) ;
- annuler la restriction, par le seuil de ressources, de la valeur de ressources totales occupées par tous les processus dans le groupe de commande, au moyen d'un sous-module d'annulation de restriction (322) du module d'ajout de processus (320) ; et
- ajouter le processus nouvellement créé, dans le groupe de commande qui n'est pas restreint par le seuil de ressources, au moyen d'un sous-module d'ajout de processus (323) du module d'ajout de processus (320) ;
un module de permutation de ressources (330) conçu pour réaliser une opération de permutation sur des ressources occupées par un processus inactif dans le groupe de commande dans lequel le processus nouvellement créé est ajouté par le module d'ajout de processus, de manière que la valeur de ressources totales occupées par tous les processus dans le groupe de commande soit inférieure au seuil de ressources.

6. Dispositif selon la revendication 5, **caractérisé en ce que** le module de permutation de ressources (330) comprend :
un premier sous-module de réglage (331) conçu pour régler un seuil de ressources initial du groupe de commande, le seuil de ressources initial étant supérieur au seuil de ressources ;
un sous-module de détection de ressources (332) conçu pour détecter si la valeur de ressources totales occupées par tous les processus dans le groupe de commande est inférieure au seuil de ressources initial réglé par le premier sous-module de réglage ;
un premier sous-module de traitement (333) conçu pour, lorsque le sous-module de détection de ressources détecte que la valeur de ressources totales occupées par tous les processus dans le groupe de commande est inférieure au seuil de ressources initial, réduire le seuil de ressources initial, et réaliser en continu l'opération consistant à détecter si la valeur de ressources totales occupées par tous les processus dans le groupe de commande est inférieure au seuil de ressources initial, jusqu'à ce que le seuil de ressources initial soit égal au seuil de ressources et que la valeur de ressources totales occupées par tous les processus dans le groupe de commande soit inférieure au seuil de ressources ; et
un second sous-module de traitement (334) conçu pour, lorsque le sous-module de détection de ressources détecte que la valeur de ressources totales occupées par tous les processus dans le groupe de commande est supérieure au seuil de ressources initial, réaliser une opération de permutation sur les ressources occupées par le processus inactif dans le groupe de commande, et réaliser en continu l'opération consistant à détecter si la valeur de ressources totales occupées par tous les processus dans le groupe de commande est inférieure au seuil de ressources initial.

7. Dispositif selon la revendication 6, **caractérisé en ce que** le premier sous-module de traitement (333) comprend :
un sous-module de réduction de seuil (3331) conçu pour réduire le seuil de ressources initial ;
un sous-module de détection de différence (3331) conçu pour détecter si une différence entre le seuil de ressources initial réduit par le sous-module de réduction de seuil et le seuil de ressources est inférieure à une valeur numérique prédéterminée ; et
un second sous-module de réglage (3332) conçu pour, lorsque le sous-module de détection de différence détecte que la différence est inférieure à la valeur numérique prédéterminée, régler le seuil de ressources initial après réduction en tant que seuil de ressources, et réaliser en continu l'opération consistant à détecter si la valeur de ressources totales occupées par tous les processus dans le groupe de commande est inférieure au seuil de ressources initial, jusqu'à ce que la valeur de ressources totales occupées par tous les processus dans le groupe de commande soit inférieure au seuil de ressources.

8. Dispositif selon la revendication 6, **caractérisé en ce que** le premier sous-module de traitement (333) comprend en outre :
un sous-module de suspension de modification (3334) conçu pour, lorsqu'une erreur se produit lors de la réduction du seuil de ressources initial, cesser de modifier le seuil de ressources initial ; et
un sous-module de cycle de détection (3335) conçu pour, après une période de temps prédéterminée, régler le seuil de ressources initial en tant que seuil de ressources initial avant réduction, et réaliser en continu l'opération consistant à détecter si la valeur de ressources totales occupées par tous les processus dans le groupe de commande est inférieure au seuil de ressources initial.

9. Programme informatique comprenant des instructions lisibles par ordinateur, qui, lorsqu'elles sont exécutées par un processeur de terminal, font mettre en œuvre au terminal un procédé selon l'une quelconque des revendications 1 à 4.

10. Support de stockage non transitoire lisible par ordinateur, comportant des instructions qui, lorsqu'elles sont exécutées par un processeur de terminal, font mettre en œuvre au terminal un procédé selon l'une quelconque des revendications 1 à 4.
